(19) **Europäisches Patentamt**

**European Patent Office**

**Office européen des brevets**

(11) **EP 1 634 914 A1**

(12) **EUROPÄISCHE PATENTANMELDUNG**

(43) Veröffentlichungstag:
**15.03.2006 Patentblatt 2006/11**

(51) Int Cl.:
***C08K 5/1515*** (2006.01)    ***C08J 5/18*** (2006.01)

(21) Anmeldenummer: **05019172.5**

(22) Anmeldetag: **03.09.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **10.09.2004  DE 102004044326**

(71) Anmelder: **Mitsubishi Polyester Film GmbH**
**65203 Wiesbaden (DE)**

(72) Erfinder:
• **Kliesch, Holger, Dr.**
**65462 Ginsheim-Gustavsburg (DE)**

• **Kuhmann, Bodo**
**65594 Runkel (DE)**
• **Kiehne, Thorsten, Dr.**
**Nagahama**
**Shiga, 526-0031 (JP)**
• **Fischer, Ingo**
**65558 Heistenbach (DE)**
• **Hilkert, Gottfried, Dr.**
**55291 Saulheim (DE)**

(74) Vertreter: **Schweitzer, Klaus et al**
**Zounek Plate Schweitzer**
**Patentanwaltskanzlei**
**Rheingaustrasse 196**
**65203 Wiesbaden (DE)**

(54) **Hydrolysebeständige Folie aus einem Polyester mit Hydrolyseschutzmittel sowie Verfahren zu ihrer Herstellung und ihre Verwendung**

(57)    Die vorliegende Erfindung betrifft eine hydrolysebeständige Folie aus einem Polyester, deren Dicke im Bereich von 0,4 bis 500 μm liegt. Die Folie enthält mindestens ein Hydrolyseschutzmittel und zeichnet sich durch ihre geringe Hydrolysegeschwindigkeit aus. Die Erfindung betrifft ferner ein Verfahren zur Herstellung der Folie sowie ihre Verwendung.

**Beschreibung**

Die Erfindung betrifft eine hydrolysebeständige Folie aus einem Polyester, deren Dicke im Bereich von 0,4 bis 500 μm liegt. Die Folie enthält mindestens ein Hydrolyseschutzmittel und zeichnet sich durch ihre geringe Hydrolysegeschwindigkeit aus. Die Erfindung betrifft ferner ein Verfahren zur Herstellung der Folie sowie ihre Verwendung.

Folien aus Polyestern im angegebenen Dickenbereich sind hinreichend bekannt. Nachteilig an solchen Polyesterfolien ist jedoch ihre Hydrolyseneigung, insbesondere bei Temperaturen oberhalb der Glastemperatur des jeweiligen Polyesters. Unter Hydrolyseneigung wird hierbei die Eigenschaft des Polyesters verstanden, unter feuchten Bedingungen hydrolytisch abzubauen, welches beispielsweise an einer Reduzierung des IV- bzw. SV-Wertes erkennbar ist. Dies ist insbesondere bei Anwendungen mit höherer Temperaturbeanspruchung wie in Folienkondensatoren, Kabelummantelungen, Flachbandkabeln, Motorschutzfolien, aber auch in Langzeitanwendungen wie in Verglasungen und Außenanwendungen ein limitierender Faktor für die Anwendung von Polyesterfolien.

Besonders ausgeprägt ist die Hydrolyseneigung bei aliphatischen Polyestern, aber auch bei aromatischen Polyestern wie PBT und PET. Wenn die Hydrolyseneigung von PET zu groß für die Anwendung wird, muss man auf das noch etwas hydrolysestabilere PEN zurückgreifen oder sogar auf andere Polymere wie z. B. Polyetherimide oder Polyimide. Diese sind jedoch deutlich teurer als PET und deshalb häufig aus wirtschaftlichen Gründen keine Lösung.

Es wurde deshalb bereits vorgeschlagen, die Hydrolysestabilität von Polyesterfolien durch die Einarbeitung von Hydrolysestabilisatoren zu verbessern.

Hydrolysebeständigere Polyesterrohstoffe, die durch Verwendung von Carbodiimiden erhalten werden, sowie daraus hergestellte Fasern und Folien sind bekannt (US-A-5,885,709, EP-A-0 838 500, CH-A-621 135). Folien, die aus solchen Rohstoffen hergestellt werden, neigen jedoch sowohl in der Herstellung als auch in der späteren Verwendung zu Ausgasungen von Isocyanaten und anderen schleimhautreizenden, bzw. gesundheitsschädlichen Neben- und Abbauprodukten. Dies ist bei flächigen Gebilden wie Folien mit großer Oberfläche ein weit größeres Problem als bei Spritzgussteilen oder ähnlichen.

Hydrolysestabilisatoren auf Basis von Epoxygruppen führen ebenfalls zu einer Hydrolysestabilisierung und sind beispielsweise in der EP-A-0 292 251 oder US-A-3,657,191 beschrieben. Diese Verbindungen basieren jedoch auf der Erzeugung von Oxiranringen mittels Epichlorhydrin und neigen u. a. aufgrund ihrer endständigen Epoxygruppen bei Erhitzung zum Abspalten niedermolekularer toxischer Verbindungen, so dass ähnliche Probleme wie bei der Verwendung von Carbodiimiden mit dem Einsatz dieser Substanzen verbunden sind. Außerdem ist ihre Einbindung in die Polyestermatrix ungenügend, was zu langen Reaktionszeiten und bei verstreckten Polyesterfolien zu einer hohen, unerwünschten Trübung führt.

Außerdem haben bekannte Hydrolysestabilisatoren wie Carbodiimide und andere Substanzen wie die in der EP-A-0 292 251 beschriebenen den Nachteil, dass sie teilweise zu starken Molekulargewichtszunahmen (Viskositätsanstieg) im Polymer während der Extrusion führen und so den Extrusionsprozess instabil und schwer beherrschbar machen.

Aufgabe der vorliegenden Erfindung ist es, einen hydrolysebeständigen Polyesterrohstoff zur Verfügung zu stellen, der die beschriebenen Nachteile des Standes der Technik vermeidet.

Diese Aufgabe wird gelöst durch eine Polyesterfolie, welche neben Polyester bevorzugt 0,1 - 20 Gew.-% (bezogen auf das Gewicht der Folie) eines Hydrolysestabilisators auf Basis von epoxidierten Fettsäurealkylestern und/ oder epoxidierten Fettsäureglyceriden enthält.

Die Folie enthält als Hauptbestandteil einen Polyester. Geeignete Polyester sind beispielsweise Polyethylenterephthalat (PET), Polyethylennaphthalat (PEN), Polybutylenterephthalat (PBT), Polytrimethylenterephthalat (PTT), bibenzolmodifiziertes Polyethylenterephthalat (PETBB), bibenzolmodifiziertes Polybutylenterephthalat (PBTBB), bibenzolmodifiziertes Polyethylennaphthalat (PENBB) oder Mischungen daraus, wobei PET, PBT, PEN und PTT sowie deren Mischungen und Co-Polyester bevorzugt sind.

Zur Herstellung der Polyester können neben den Hauptmonomeren wie Dimethylterephthalat (DMT), Ethylenglycol (EG), Propylenglycol (PG), 1,4-Butandiol, Terephthalsäure (TA), Benzoldicarbonsäure und/oder 2,6-Naphthalindicarbonsäure (NDA) auch Isophthalsäure (IPA), trans- und/oder cis-1,4-Cyclohexandimethanol (c-CHDM, t-CHDM oder c/t-CHDM) und andere geeignete Dicarbonsäurekomponenten (oder Dicarbonsäureester) und Diolkomponenten verwendet werden.

Bevorzugt sind Polymere, bei denen die Dicarbonsäurekomponente zu 90 Gew.-% (bezogen auf die Gesamtmenge der Dicarbonsäurekomponente) und mehr, insbesondere zu 95 Gew.-% und mehr, aus TA besteht. Bevorzugt sind weiterhin Thermoplaste, bei denen die Diolkomponente zu 90 Gew.-% und mehr, insbesondere zu 93 Gew.-% (bezogen auf die Gesamtmenge der Diole) und mehr, aus EG besteht. Bevorzugt sind auch Polymere, bei denen der Diethylenglycolanteil am Gesamtpolymer im Bereich von 0,5 bis 2 Gew.-% liegt. Bei allen in diesem Absatz genannten Mengenangaben bleibt das Hydrolyseschutzmittel unberücksichtigt.

Geeignete Polyester sind auch aliphatische Polyester wie Polyhydroxybutyrat (PHB) und sein Copolymer mit polyhydroxyvalerat (PHV) polyhydroxybutyrat-valerat (PHBV), Poly(e-Caprolacton) (PCL), SP 3/6, SP 4/6 (bestehend aus 1,3-Propandiol/Adipat bzw.1,4-Butandiol/Adipat), Polycaprolactam bzw. allgemein adipinsäurehaltige Polyester und die Ester anderer aliphatischer Carbonsäuren.

Die Folie gemäß der Erfindung kann weiterhin anorganische oder organische Partikel, die zur Einstellung der Oberflächentopographie oder Optik benötigt werden, enthalten.

Die Menge der eingesetzten Partikel ist abhängig von den verwendeten Substanzen und ihrer Partikelgröße. Letztere liegt im allgemeinen im Bereich von 0,01 bis 30,0, vorzugsweise von 0,1 bis 5,0 und insbesondere von 0,3 bis 3,0 $\mu$m.

Geeignete Verbindungen zur Erzielung der Rauheit sind z. B. Kalziumcarbonat, Apatit, Siliziumdioxid, Titandioxid, Aluminiumoxid, vernetztes Polystyrol, vernetztes Polymethylmethacrylat (PMMA), Zeolithe und andere Silikate wie Aluminiumsilikate. Diese Verbindungen werden im allgemeinen in Mengen von 0,05 bis 5 Gew.-%, vorzugsweise 0,1 bis 0,6 Gew.-%, (bezogen auf das Gewicht der Folie) eingesetzt.

Neben den erwähnten Additiven kann die Folie zusätzlich weitere Komponenten wie Flammschutzmittel und/ oder Radikalfänger und/oder andere Polymere wie Polyetherimide enthalten.

Die erfindungsgemäße Folie enthält einen Hydrolysestabilisator, der bevorzugt über die so genannte Masterbatch-Technologie direkt bei der Folienherstellung zudosiert wird, wobei der Anteil des Hydrolysestabilisators bevorzugt im Bereich von 0,1 bis 20,0 Gew.-%, vorzugsweise von 1,0 bis 6,0 Gew.-% und besonders bevorzugt 1,5 - 4,5 Gew.-%, bezogen auf das Gewicht des kristallisierbaren Thermoplasten, liegt. Im Masterbatch beträgt der Anteil des Hydrolysestabilisators im Allgemeinen 2,0 bis 50,0 Gew.-%, bevorzugt 4,0 bis 20,0 Gew.-%, jeweils bezogen auf das Gesamtgewicht des Masterbatches.

Geeignete Hydrolysestabilisatoren sind epoxidierte Fettsäurealkylester und/oder epoxidierte Fettsäureglyceride.

Hierbei sind Mischungen, die aus

a) 90 bis 10 Gew.-% (bezogen auf die Mischung) langkettigen epoxidierten Fettsäurealkylestern und

b) 10 bis 90 Gew.-% (bezogen auf die Mischung) epoxidierten Fettsäureglyceriden

bestehen, bevorzugt.

Besonders geeignet sind solche Hydrolysestabilisatoren, die einen Epoxidsauerstoffgehalt von mindestens 0,5 Gew.-%, bevorzugt mindestens 1,5 und besonders bevorzugt größer 2,0 Gew.% aufweisen.

Geeignete epoxidierte Fettsäureglyceride sind z. B. epoxidiertes Sojabohnenöl, epoxidiertes Leinöl, epoxidiertes Rüböl, epoxidiertes Sonnenblumenöl und epoxidiertes Fischöl (die Zusammensetzung der genannten Öle, insbesondere die Art und Menge der vorhandenen Fettsäuren, ist beispielsweise beschrieben in Römpp Chemie Lexikon, 10. Auflage, Georg Thieme Verlag, Stuttgart). Als epoxidierte Fettsäurealkylester werden bevorzugt die thermisch stabilen 2-Ethylhexylester ungesättigter Fettsäuren oder Fettsäuregemische der Rüböl, Leinöl, Sojaöl oder Fischöl zugrunde liegenden Fettsäuren eingesetzt, welche bevorzugt Epoxidgehalte von 1,5 — 15 Gew.-% Epoxidsauerstoff (bezogen auf die epoxidierten Fettsäurealkylester), vorzugsweise 4 — 8 Gew.-%, aufweisen.

Zur Herstellung der Mischungen werden die epoxidierten Glyceride mit den epoxidierten Fettsäurestern in den oben angegebenen Mengen bei Temperaturen von 20 bis 120 °C, vorzugsweise bei 30 bis 60°C gemischt, wobei flüssige Produkte erhalten werden.

Der Hydrolysestabilisator wird dem Thermoplasten der Folie vorzugsweise über die Masterbatch-Technologie zugegeben. Dazu wird er zunächst in einem Trägermaterial dispergiert. Als Trägermaterial kommen der Thermoplast selbst, z. B. Polyethylenterephthalat, oder auch andere Polymere, die mit dem Thermoplasten verträglich sind, in Frage. Nach der Zudosierung des Masterbatches zu dem Thermoplasten für die Folienherstellung schmelzen die Bestandteile des Masterbatches während der Extrusion und werden so in dem Thermoplasten gelöst bzw. fein dispergiert.

Die Herstellung des Masterbatches erfolgt zweckmäßigerweise nach einem der beiden folgenden Verfahren:

1. Das Trägermaterial und das flüssige Hydrolyseschutzmittel werden in einem Extruder, bevorzugt einem Zweischneckenextruder, aufgeschmolzen, gemischt und dann durch eine Lochdüse extrudiert, abgeschreckt und granuliert. Bevorzugt ist dabei ein Verfahren, in dem das Trägermaterial (Polymer) zuerst im Extruder aufgeschmolzen wird und nach der Entgasung das flüssige Hydrolyseschutzmittel direkt in die Schmelze dosiert wird.

2. Zugabe des Hydrolyseschutzmittels bei der Trägermaterialherstellung. Das Hydrolyseschutzmittel wird dabei direkt in die Leitung gepumpt, durch die das fertige Trägermaterial (Polymer) zu den Lochdüsen vor der Granulierung gepumpt wird. Diese Methode hat jedoch den Nachteil, dass die Durchmischung von Hydrolyseschutzmittel und Trägermaterial nicht so gut ist wie bei Methode 1. Eine Eindosierung in den Reaktionsreaktor bei der Trägermaterialherstellung (Polymer) führt aufgrund der in der Regel sehr hohen Viskositätsunterschiede meist zu noch schlechteren Durchmischungen.

Sofern die erfindungsgemäße Folie Partikel enthält, hat es sich als günstig erwiesen, wenn diese Partikel auch bereits in dem Hydrolyseschutzmittel-Masterbatch enthalten sind, da Partikel die Verteilung des Hydrolysestabilisators positiv beeinflussen. Als besonders günstig für die Verteilung hat es sich erwiesen, wenn das den Hydrolysestabilisator enthaltende Trägermaterial mindestens 0,3, bevorzugt mehr als 0,75 Gew.-% (bezogen auf das Masterbatch) $SiO_2$- und/oder $Al_2O_3$-Partikel enthält.

Weiterhin hat es sich als günstig erwiesen, wenn dem Masterbatch (bzw. dem Polymerrohstoff), welches den Hydrolysestabilisator enthält, ein Stabilisator in Form eines Radikalfängers hinzugegeben wird, da dadurch dem Verlust an aktiven Oxirangruppen in der Extrusion durch radikalische Nebenreaktionen entgegengewirkt wird. Zweckmäßigerweise enthält die erfindungsgemäße Folie solche Stabilisatoren als Radikalfänger bzw. Thermostabilisatoren in Mengen von 50 bis 15.000 ppm, bevorzugt 100 bis 5.000 ppm, besonders bevorzugt 300 bis 1000 ppm, bezogen auf das Gewicht der Folie. Die dem Polyesterrohstoff zugegebenen Stabilisatoren werden beliebig ausgewählt aus der Gruppe der primären Stabilisatoren wie sterisch gehinderte Phenole oder sekundäre aromatische Amine oder der Gruppe der sekundären Stabilisatoren wie Thioether, Phosphite und Phosphonite sowie Zink-dibutyl-dithiocarbamat oder synergistische Mischungen aus primären und sekundären Stabilisatoren. Bevorzugt sind die phenolischen Stabilisatoren. Zu den phenolischen Stabilisatoren zählen insbesondere sterisch gehinderte Phenole, Thio-bisphenole, Alkylidenbisphenole, Alkyl-phenole, Hydroxybenzyl-Verbindungen, Acyl-amino-phenole und Hydroxyphenylpropionate (entsprechende Verbindungen sind beispielsweise beschrieben in "Kunststoffadditive", 2. Ausgabe, Gächter Müller, Carl Hanser-Verlag, und in "Plastics Additives Handbook", 5. Ausgabe, Dr. Hans Zweifel, Carl Hanser-Verlag). Besonders bevorzugt sind die Stabilisatoren mit folgenden CAS-Nummern: 6683-19-8, 36443-68-2, 35074-77-2, 65140-91-2, 23128-74-7, 41484-35-9, 2082-79-3 sowie ®Irganox 1222 der Firma Ciba Specialities, Basel, Schweiz, wobei in besonderen Ausführungsformen die Typen ®Irganox 1010, ®Irganox 1222, ®Irganox 1330 und ®Irganox 1425 oder Mischungen daraus.

Neben der Zugabe des Hydrolyseschutzmittels über die Masterbatchtechnologie kann das Hydrolyseschutzmittel auch direkt bei der Folienherstellung zugegeben werden. Dies führt jedoch nur zu guten Ergebnissen, wenn Zweischneckenextruder verwendet werden. Auch hier werden die besten Resultate hinsichtlich Folienqualität und Hydrolysestabilität erzielt, wenn das Hydrolyseschutzmittel direkt in die Schmelze im jeweiligen Extruder nach der Entgasungszone dosiert wird.

Die Folie gemäß der Erfindung wird im allgemeinen nach an sich bekannten Extrusionsverfahren hergestellt und ist ein- oder mehrschichtig, wobei der Hydrolysestabilisator bevorzugt in allen Schichten enthalten ist, jedoch auch Ausführungen möglich sind, in denen nicht alle Schichten mit dem Hydrolysestabilisator ausgerüstet sind.

Bei dem Verfahren zur Herstellung der erfindungsgemäßen Folien wird zweckmäßigerweise so vorgegangen, dass die entsprechenden Schmelzen durch eine Flachdüse extrudiert werden, die so erhaltene Folie zur Verfestigung auf einer oder mehreren Walze/n (Kühlwalze) als weitgehend amorphe Vorfolie abgezogen und abgeschreckt wird, die Folie anschließend erneut erhitzt und biaxial gestreckt (orientiert) und die biaxial gestreckte Folie thermofixiert wird. Im Bereich der Extrusion hat es sich dabei als günstig erwiesen, wenn Temperaturen von 295 °C nicht überschritten werden. Besonders günstig ist es, wenn der Bereich der Düse und speziell der Bereich der Düsenlippe und nahe daran nicht wärmer als 290 °C, bevorzugt nicht wärmer als 285 °C und besonders bevorzugt nicht wärmer als 275 °C ist.

Die biaxiale Verstreckung wird im Allgemeinen sequentiell durchgeführt. Dabei wird vorzugsweise erst in Längsrichtung (d. h. in Maschinenrichtung, = MD-Richtung) und anschließend in Querrichtung (d. h. senkrecht zur Maschinenrichtung, = TD-Richtung) verstreckt. Dies führt zu einer Orientierung der Molekülketten. Das Verstrecken in Längsrichtung lässt sich mit Hilfe zweier entsprechend dem angestrebten Streckverhältnis verschieden schnell laufender Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im allgemeinen wird die Längs- und auch die Querstreckung bei $T_g + 10$ °C bis $T_g + 60$ °C ($T_g$ = Glastemperatur der Folie) durchgeführt. Das Längsstreckverhältnis liegt allgemein im Bereich von 2,0 : 1 bis 6,0 : 1, vorzugsweise 3,0 : 1 bis 4,5 : 1. Das Querstreckverhältnis liegt allgemein im Bereich von 2,0 : 1 bis 5,0 : 1, vorzugsweise 3,0 : 1 bis 4,5 : 1 und das der gegebenenfalls durchgeführten zweiten Längs- und Querstreckung liegt bei 1,1 : 1 bis 5,0 : 1.

Die erste Längsstreckung kann gegebenenfalls gleichzeitig mit der Querstreckung (Simultanstreckung) durchgeführt werden. Als besonders günstig hat es sich dabei erwiesen, wenn das Streckverhältnis in Längs- und Querrichtung jeweils größer als 3,0 ist.

Bei der nachfolgenden Thermofixierung wird die Folie etwa 0,1 bis 10 s lang bei einer Temperatur von 150 bis 260 °C, vorzugsweise 200 bis 245 °C, gehalten. Anschließend an beziehungsweise beginnend in der Thermofixierung wird die Folie um 0 bis 15 %, vorzugsweise um 1,5 bis 8 %, in Quer- und gegebenenfalls auch in Längsrichtung relaxiert und die Folie dann in üblicher Weise abgekühlt und aufgewickelt.

Eine auf diese Weise hergestellte Folie weist eine deutlich geringere Hydrolyseneigung sowohl bei Raumtemperatur als auch bei Temperaturen bis 210 °C auf als eine unmodifizierte Polyesterfolie. Die Stabilisierung ist dabei weitgehend unabhängig von der Foliendicke und der Temperatur in einem Messbereich von 25 bis 210 °C. So weist beispielsweise eine 12 $\mu$m dicke einschichtige PET-Folie (DEG-Gehalt 1 Gew.-% und Start SV-Wert von 720) mit 2 Gew.-% eines Hydrolysestabilisatorgemisches aus einem Teil epoxidiertem Sojabohnenöl mit einem Epoxidsauerstoffgehalt von 6,3 Gew.-% und einem Teil epoxidiertem Stearinsäure-2-ethylhexylester mit einem Epoxidsauerstoffgehalt von 4,5 Gew.-% (Epoxidsauerstoffgehalt der Mischung 5,3 Gew.-%) nach 96 h im Autoklaven bei Wasserdampfsättigung und 110°C noch einen SV-Wert von über 500 auf und ist damit noch mechanisch stabil, während eine unstabilisierte Folie nach dieser Zeit bereits unter SV 400 abgefallen war und damit so gut wie keine Biegebruchfestigkeit mehr aufweist. Die stabilisierte Folie hält 50 % länger unter den genannten Bedingungen aus, bis sie die kritische Grenze von 400 SV-Einheiten erreicht. Denselben relativen Zeitgewinn findet man auch bei 80 °C und bei 170°C.

Besonders überraschend war, dass sich trotz der guten Langzeithydrolysestabilisierung kein unerwünschter Viskositätsaufbau im Extruder zeigte und bei der Folienherstellung kein erhöhtes Gel oder Stippenniveau beobachtet wurde.

Folien, die mittels der genannten Hydrolysestabilisatoren stabilisiert werden, eignen sich hervorragend zur Herstellung von Produkten, die Polyesterfolien enthalten und entweder für eine lange Lebensdauer (größer 1 Jahr) ausgelegt sind oder die während ihres Einsatzes mit höheren Temperaturen (größer 80 °C), insbesondere bei hoher Feuchte, konfrontiert werden, und für Außenanwendungen.

So eignen sie sich hervorragend zur Herstellung von Folienkondensatoren (bevorzugter Dickenbereich 0,4 - 12 $\mu$m). Diese können auf den bekannten konventionellen Wegen und Prozessabläufen (u. a. Metallisierung, Konfektionierung, Wickeln, Schopierung, Kontaktierung, Becherverguss usw.) hergestellt werden und weisen gegenüber den herkömmlichen Polyesterfolienkondensatoren eine deutlich erhöhte Lebensdauer auf und führen im Gegensatz zu schon beschriebenen Kondensatoren mit Carbodümidstabilisatoren auch bei starkem Erhitzen nicht zur Emission von gesundheitsschädlichen Isocyanaten. Für die Herstellung von Kondensatoren hat es sich als günstig erwiesen, wenn die Folien einen Längsschrumpf von weniger als 4 % und einen Querschrumpf von weniger als 1 % bei 200 °C aufweisen, da sie sich dann besonders gut zur Herstellung von SMD-Kondensatoren eignen. Die erfindungsgemäßen Folien weisen solch niedrige Schrumpfwerte auf.

Eine weitere Anwendung sind z. B. Flachbandkabel in Automobilen. Hierzu werden Folien (bevorzugt 12 - 200 $\mu$m) mittels eines Heißsiegelklebers (z. B. EKP-Heißsiegellack 230 der Firma EKP Verpackungslacke GmbH (Deutschland)) mit Kupfer laminiert. Verbunde, die Polyester mit Hydrolyseschutzmittel enthalten, halten dabei den in Automobilen auftretenden mechanischen Belastungen (u. a. Vibrationen) weit länger Stand als Verbunde mit herkömmlichen Polyesterfolien. Hierbei ist jedoch darauf zu achten, dass auch die Kleber weitgehend hydrolyseunempfindlich sind (bei polyesterbasierten Klebern empfiehlt sich eine Ausrüstung mit den genannten Hydrolysestabilisatoren).

In den nachfolgenden Ausführungsbeispielen erfolgt die Messung der einzelnen Eigenschaften gemäß den angeführten Normen bzw. Verfahren.

**Messmethoden**

**Standardviskosität (SV)**

Die Standardviskosität SV wird - angelehnt an DIN 53726 — durch die Messung der relativen Viskosität $\eta_{rel.}$ einer 1 Gew.-%igen Lösung in Dichloressigsäure (DCE) in einem Ubbelohde Viskosimeter bei 25 °C gemessen. Der SV-Wert ist wie folgt definiert:

$$SV = (\eta_{rel.} - 1) \cdot 1000$$

**Rauheit**

Die Rauheit Ra der Folie wird nach DIN 4768 bei einem Cut-off von 0,25 mm bestimmt.

**Schrumpf**

Der thermische Schrumpf wurde an quadratischen Folienmustern mit einer Kantenlänge von 10 cm bestimmt. Die Proben werden so ausgeschnitten, dass eine Kante parallel zur Maschinenrichtung und eine Kante senkrecht zur Maschinenrichtung verläuft. Die Proben werden genau ausgemessen (die Kantenlänge $L_0$ wird für jede Maschinenrichtung TD und MD bestimmt, $L_{0\,TD}$ und $L_{0\,MD}$) und werden 15 min bei der angegeben Schrumpfungstemperatur (hier 200 °C) in einem Umlufttrockenschrank getempert. Die Proben werden entnommen und bei Raumtemperatur genau ausgemessen (Kantenlänge $L_{TD}$ und $L_{MD}$). Der Schrumpf ergibt sich aus der Gleichung

$$\text{Schrumpf [\%] MD} = 100 \cdot (L_{0\,MD} - L_{MD}) / L_{0\,MD}$$

$$\text{Schrumpf [\%] TD} = 100 \cdot (L_{0\,TD} - L_{TD}) / L_{0\,TD}$$

**Messung der Trübung**

Die Messung erfolgt an dem Hazegard Hazemeter XL-211 der Fa. BYK Gardner. Das Messgerät ist 30 min vor der Messung einzuschalten. Es ist darauf zu achten, dass der Lichtstrahl durch die Kugel zentrisch an die Austrittsöffnung geht.

Herstellung, Form und Anzahl der Proben:

Aus der zu untersuchenden Folie werden je 5 Proben mit einer Größe von 100 • 100 mm ausgeschnitten. Die Längs- und Querrichtung werden am Rand gekennzeichnet, da die Messungen in beiden Maschinenrichtungen erfolgen.

**Messung der Trübung**

- Schalter 1 "OPEN" drücken
- Schalter 2 auf "X10" einstellen und mit dem "Zero"-Knopf Digitalanzeige auf 0.00 kalibrieren
- Umschalten des Schalters 1 auf "Referenz" und des Schalters 2 auf "X1"
- Mit dem "Calibrate"-Knopf Digitalanzeige auf 100 bringen
- Probe in Längsrichtung einlegen
- Anzeigewert für die Transparenz ablesen
- Die Digitalanzeige mit dem "Calibrate"-Knopf auf 100 kalibrieren
- Schalter 1 auf "OPEN" stellen
- Anzeigewert für die Trübung in Längsrichtung ablesen
- Probe in Querrichtung drehen
- Anzeigewert für die Trübung in Querrichtung ablesen

Digital-
Anzeige

Schalter 1
„Open"
„Reference"

Probenort

„Zero"

Schalter2
(X10, X1)

„Calibrate"

Auswertung

Die Trübung erhält man durch die Mittelung der jeweiligen 5 Einzelwerte (Längs und Quer).

**Autoklavierung**

Die Folien (10•2 cm) werden an einem Draht in den Autoklaven (Adolf Wolf SANOklav Typ: ST-MCS-204) gehängt und der Autoklav mit 2 l Wasser befüllt. Nach dem Schließen des Autoklaven wird dieser erhitzt. Bei 100 °C wird die Luft durch den Wasserdampf über das Ablassventil verdrängt. Dies wird nach ca. 5 min geschlossen, worauf die Temperatur auf 110°C und der Druck auf 1,5 bar ansteigt. Nach 24 h wird der Autoklav automatisch abgeschaltet und nach Öffnen des Ablassventils die Folien entnommen. An diesen wird dann der SV-Wert bestimmt.

**Beispiele**

Hydrolysestabilisator 1

In einem Stahlreaktor, ausgerüstet mit einem Innenthermometer, wurden bei Raumtemperatur 10 kg epoxidiertes Sojabohnenöl mit einem Epoxidsauerstoffgehalt von 6,3 Gew.-% vorgelegt und mit 10 kg epoxidiertem Stearinsäure-2-ethylhexylester mit einem Epoxidsauerstoffgehalt von 4,5 Gew.-% versetzt und anschließend innerhalb von 30 min bei 25°C zu einer klaren homogenen Lösung gerührt. Der Epoxidsauerstoffgehalt beträgt danach 5,3 Gew.-%

Hydrolysestabilisator 2

In einem Stahlreaktor, ausgerüstet mit einem Innenthermometer, wurden bei Raumtemperatur 15 kg epoxidiertes Leinöl mit einem Epoxidsauerstoffgehalt von 9,1 Gew.-% vorgelegt und mit 5 kg epoxidiertem Stearinsäure-2-ethylhexylester mit einem Epoxidsauerstoffgehalt von 4,5 Gew.-% versetzt und anschließend innerhalb von 30 min bei 45°C zu einer klaren homogenen Lösung gerührt. Der Epoxidsauerstoffgehalt der Mischung beträgt danach 7,2 Gew.-%

Hydrolyrsestabilisator 3

Epoxidiertes Leinöl mit einem Epoxidsauerstoffgehalt von 9,1 Gew.-% mit 2 Gew.-% Irganox 1010.

Rohstoffherstellung (hydrolysestabilisiertes Polymer)

PET mit Hydrolysestabilisator 1

Ein Polyethylenterephthalatrohstoff mit 10.000 ppm Sylobloc 44H (Grace) und 5000 ppm Aerosil TT600 (Degussa) sowie 3000 ppm Irganox 1010 (Ciba) und einem DEG-Gehalt von 1 % wird in einem Zweischneckenextruder der Firma Coperion aufgeschmolzen und mit 8 Gew.-% Hydrolysestabilisator1 gemischt. Hydrolysestabilisator 1 wurde dabei mittels einer Pumpe direkt in die Schmelze nach der Entgasungszone dosiert. SV-Wert 790.

PET mit Hydrolysestabilisator 2

Polyethylenterephthalatrohstoff RT49 (R1) der Firma Invista wurde in einem Zweischneckenextruder der Firma Coperion aufgeschmolzen und mit 4 Gew.-% Hydrolysestabilisator 2 gemischt. Hydrolysestabilisator 2 wurde dabei mittels einer Pumpe direkt in die Schmelze nach der Entgasungszone dosiert. SV-Wert 790.

PET mit Hydrolysestabilisator 3

Polyethylenterephthalatrohstoff RT49 (R1) der Firma Invista wurde in einem Zweischneckenextruder der Firma Coperion aufgeschmolzen und mit 4 Gew.-% Hydrolysestabilisator 3 gemischt. Hydrolysestabilisator 3 wurde dabei mittels einer Pumpe direkt in die Schmelze nach der Entgasungszone dosiert. SV-Wert 790.

Weitere verwendete Rohstoffe

Rohstoff R1          PET (Typ RT49, Invista Deutschland), SV-Wert 790

Masterbatch MB1    1,0 Gew.-% Sylobloc 44H, 0,5 Gew.-% Aerosil TT600 und 98,5 Gew.-% PET; SV-Wert 790; DEG-Gehalt von 1 Gew.-%

Folienherstellung (Kondensatorfolie) Prozess 1:

Thermoplast-Chips wurden gemäß den in den Beispielen angegebenen Verhältnissen gemischt und in einem Wirbelschichttrockner bei 155 °C für 1 min vorkristallisiert, anschließend für 3 h in einem Schachttrockner bei 150 °C getrocknet und bei 278 °C extrudiert. Das geschmolzene Polymer wurde aus einer Düse über eine Abzugswalze abgezogen. Die Dicke dieser Vorfolie betrug 29 $\mu$m. Der Film wurde um den Faktor 3,8 in Maschinenrichtung bei 116 °C gestreckt und in einem Rahmen bei 110°C eine Querstreckung um den Faktor 3,7 durchgeführt. Anschließend wurde die Folie bei 230°C thermofixiert und in Querrichtung um 8 % bei Temperaturen von 200 - 180°C relaxiert. Die Endfoliendicke betrug 2 $\mu$m.

Folienherstellung für Flachbandkabel Prozess 2:

Thermoplast-Chips wurden gemäß den in den Beispielen angegebenen Verhältnissen gemischt und bei 278°C in einem Zweischneckenextruder (JapanSteelWorks) extrudiert. Das geschmolzene Polymer wurde aus einer Düse über eine Abzugswalze abgezogen. Die Dicke dieser Vorfolie betrug 530 $\mu$m. Der Film wurde um den Faktor 3,4 in Maschinenrichtung bei 116°C gestreckt und in einem Rahmen bei 110°C eine Querstreckung um den Faktor 3,1 durchgeführt. Anschließend wurde die Folie bei 225°C thermofixiert und in Querrichtung um 3% bei Temperaturen von 200 bis 180°C relaxiert. Die Endfoliendicke betrug 50 $\mu$m.
Die Eigenschaften der hergestllten Folien sind der nachstehenden Tabelle zu entnehmen.

**Tabelle**

| | | Beispiel 1 | Beispiel 2 | Beispiel 3 | Beispiel 4 | Vergleichs-beispiel 1 | Vergleichs-beispiel 2 |
|---|---|---|---|---|---|---|---|
| PET m. Hydrolyse-stabilisator 1 | in Gew.-% | 25 | | | | | |
| PET m. Hydrolyse-stabilisator 2 | in Gew.-% | | 90 | | | | |
| PET m. Hydrolyse-stabilisator 3 | in Gew.-% | | | 25 | 90 | | |
| R1 | in Gew.-% | 75 | | 75 | | 75 | 90 |
| MB1 | in Gew.-% | | 10 | | 10 | 25 | 10 |
| Prozess | Nr. | 1 | 2 | 2 | 2 | 1 | 2 |
| Foliendicke | in µm | 2 | 50 | 50 | 50 | 2 | 50 |
| Ra-Wert | in nm | 85 | 90 | 125 | 93 | 82 | 97 |
| SV-Wert | | 765 | 785 | 788 | 784 | 763 | 787 |
| SV Wert nach 96 h bei 110 °C im Autoklav bei Wassersättigung | | 505 | 530 | 511 | 500 | 391 | 399 |

**Patentansprüche**

1. Polyesterfolie, **dadurch gekennzeichnet, dass** sie Polyester und einen Hydrolysestabilisator auf Basis von epoxidierten Fettsäurealkylestern und/oder epoxidierten Fettsäureglyceriden enthält.

2. Polyesterfolie nach Anspruch 1, **dadurch gekennzeichnet, dass** die Folie ein- oder mehrschichtig ist.

3. Polyesterfolie nach Anspruch 2, **dadurch gekennzeichnet, dass** sie mehrschichtig ist.

4. Polyesterfolie nach Anspruch 3, **dadurch gekennzeichnet, dass** der Hydrolysestabilisator in allen Schichten der mehrschichtigen Folie vorhanden ist.

5. Polyesterfolie nach einem der Ansprüche 1 bis 4, **dadurch gekennzeichnet, dass** die Folie organische oder anorganische Partikel enthält.

6. Polyesterfolie nach einem der Ansprüche 1 bis 5, **dadurch gekennzeichnet, dass** sie biaxial orientiert ist.

7. Polyesterfolie nach einem der Ansprüche 1 bis 6, **dadurch gekennzeichnet, dass** sie Flammschutzmittel und/oder Radikalfänger enthält.

8. Polyesterfolie nach einem der Ansprüche 1 bis 7, **dadurch gekennzeichnet, dass** 0,1 bis 20,0 Gew.-% (bezogen auf des Gewicht der Folie) Hydrolysestabilisator vorhanden sind.

9. Polyesterfolie nach einem der Ansprüche 1 bis 8, **dadurch gekennzeichnet, dass** der Hydrolysestabilisator eine Mischung ist, die aus

   a) 90 bis 10 Gew.-% (bezogen auf die Mischung) epoxidierten Fettsäurealkylestern und
   b) 10 bis 90 Gew.-% (bezogen auf die Mischung) epoxidierten Fettsäureglyceriden

   besteht.

10. Polyesterfolie nach einem der Ansprüche 1 bis 9, **dadurch gekennzeichnet, dass** der Hydrolysestabilisator einen Epoxidsauerstoffgehalt von mindestens 0,5 Gew.-% aufweist.

11. Polyesterfolie nach einem der Ansprüche 1 bis 10, **dadurch gekennzeichnet, dass** die epoxidierten Fettsäureglyceride ausgewählt sind aus einer oder mehreren der folgenden Substanzen: epoxidiertes Sojabohnenöl, epoxidiertes Leinöl, epoxidiertes Rüböl, epoxidiertes Sonnenblumenöl und epoxidiertes Fischöl.

12. Polyesterfolie nach einem der Ansprüche 1 bis 11, **dadurch gekennzeichnet, dass** die epoxidierten Fettsäurealkylester ausgewählt sind aus einer oder mehreren der folgenden Substanzen: thermisch stabile 2-Ethylhexylester der ungesättigten Fettsäuren oder Fettsäuregemische der Rüböl, Leinöl, Sojaöl oder Fischöl zugrundeliegenden Fettsäuren.

13. Polyesterfolie nach einem der Ansprüche 1 bis 12, **dadurch gekennzeichnet, dass** die epoxidierten Fettsäurealkylester Epoxidsauerstoffgehalte von 1,5 —15 Gew.-% Epoxidsauerstoff aufweisen.

14. Verfahren zur Herstellung einer Polyesterfolie nach Anspruch 1, **dadurch gekennzeichnet, dass** eine Schmelze, die Polyester und ein Masterbatch aus Polyester und einem Hydrolysestabilisator auf Basis von epoxidierten Fettsäurealkylestern und/oder epoxidierten Fettsäureglyceriden enthält, durch eine Flachdüse extrudiert wird, die so erhaltene Folie zur Verfestigung auf einer oder mehreren Walze/n als weitgehend amorphe Vorfolie abgezogen und abgeschreckt wird, die Folie anschließend erneut erhitzt und biaxial gestreckt und die biaxial gestreckte Folie thermofixiert wird.

15. Verwendung einer Folie nach Anspruch 1 zur Herstellung von Folienkondensatoren, Kabelummantelungen, Flachbandkabeln oder Motorschutzfolien.

16. Verwendung einer Folie nach Anspruch 1 in Verglasungen und Außenanwendungen.

# EP 1 634 914 A1

**Europäisches Patentamt**    **EUROPÄISCHER RECHERCHENBERICHT**

Nummer der Anmeldung

EP 05 01 9172

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2004/069912 A (BASF AKTIENGESELLSCHAFT; SCHERZER, DIETRICH; ENGELMANN, JOCHEN; YAMAMO) 19. August 2004 (2004-08-19) * Seite 1, Zeile 3 - Zeile 5 * | 1-16 | C08K5/1515 C08J5/18 |
| Y | * Seite 21, Zeile 16 - Zeile 28 * ----- | 1-16 | |
| X | US 5 589 126 A (SHIH ET AL) 31. Dezember 1996 (1996-12-31) * Beispiele * ----- | 1-16 | |
| X | US 4 540 729 A (WILLIAMS ET AL) 10. September 1985 (1985-09-10) * Ansprüche; Beispiele * ----- | 1-16 | |
| Y | EP 1 371 681 A (MITSUBISHI POLYESTER FILM GMBH) 17. Dezember 2003 (2003-12-17) * Ansprüche 1,6 * ----- | 1-16 | |

**RECHERCHIERTE SACHGEBIETE (IPC)**

C08L
C08K
C08J

Der vorliegende Recherchenbericht wurde für alle Patentansprüche erstellt

| Recherchenort | Abschlußdatum der Recherche | Prüfer |
|---|---|---|
| München | 23. November 2005 | Vaccaro, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

11

**ANHANG ZUM EUROPÄISCHEN RECHERCHENBERICHT
ÜBER DIE EUROPÄISCHE PATENTANMELDUNG NR.**                EP 05 01 9172

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-11-2005

| Im Recherchenbericht angeführtes Patentdokument | Datum der Veröffentlichung | Mitglied(er) der Patentfamilie | | Datum der Veröffentlichung |
|---|---|---|---|---|
| WO 2004069912 A | 19-08-2004 | CA | 2514589 A1 | 19-08-2004 |
| | | DE | 10304341 A1 | 12-08-2004 |
| | | EP | 1592737 A1 | 09-11-2005 |
| US 5589126 A | 31-12-1996 | KEINE | | |
| US 4540729 A | 10-09-1985 | BE | 900589 A1 | 14-03-1985 |
| | | CH | 660745 A5 | 15-06-1987 |
| | | DE | 3433852 A1 | 04-04-1985 |
| | | FR | 2552095 A1 | 22-03-1985 |
| | | GB | 2146648 A | 24-04-1985 |
| | | IT | 1177985 B | 03-09-1987 |
| | | JP | 60086157 A | 15-05-1985 |
| | | NL | 8402810 A | 16-04-1985 |
| | | NO | 843645 A | 18-03-1985 |
| | | SE | 458120 B | 27-02-1989 |
| | | SE | 8404625 A | 17-03-1985 |
| | | ZA | 8406906 A | 24-04-1985 |
| EP 1371681 A | 17-12-2003 | DE | 10222348 A1 | 04-12-2003 |
| | | JP | 2003335872 A | 28-11-2003 |
| | | US | 2003219614 A1 | 27-11-2003 |

EPO FORM P0461

Für nähere Einzelheiten zu diesem Anhang : siehe Amtsblatt des Europäischen Patentamts, Nr.12/82